# EUROPEAN PATENT SPECIFICATION

(11) **EP 3 231 252 B1**
(45) Date of publication and mention of the grant of the patent: **05.12.2018**
(21) Application number: 15812994.0
(22) Date of filing: 08.12.2015
(51) Int. Cl.: H05B 6/64, B64D 15/00, H05B 6/68, H05B 6/80

(54) **DEICING OF STRUCTURES USING MICROWAWES GENERATED BY TRANSISTORS**
ENTEISUNG VON STRUKTUREN MIT DURCH TRANSISTOREN ERZEUGTEN MIKROWELLEN
DÉGIVRAGE DE STRUCTURES À L'AIDE D'HYPERFRÉQUENCES GÉNÉRÉES PAR DES TRANSISTORS

(30) Priority: 10.12.2014 SE 1400582; 23.01.2015 SE 1500038
(43) Date of publication of application: 18.10.2017
(73) Proprietor: Icesolution AS, 1630 Gamle Fredrikstad (NO)
(72) Inventor: KARTHÄUSER, Joachim, 192 51 Sollentuna (SE)
(74) Representative: Ehrner & Delmar Patentbyrå AB
(86) International application number: PCT/EP2015/078990
(87) International publication number: WO 2016/091882

(56) References cited:
- WO-A1-2013/172762
- US-A- 5 061 836
- US-A- 5 615 849
- US-A1- 2003 015 524

## Description

### Field of the invention

This invention relates to microwave technology, deicing of structures such as airfoils, wind turbine blades, airplane wings, helicopter wings, marine structures, power lines and the like.

### Background and prior art

The PCT document WO/2013/172 762A1 describes deicing of e.g. wind power turbine blades by microwaves. Magnetrons are traditionally used to generate microwaves. Recently, progress has been made in the industrialization of solid state radio frequency (RF) transistors. Power generation (ca. 250 W) and efficiency (50-65%) have been increased, and despite lower power generation compared to magnetrons (> 5000 W), power transistors turn out to be useful components in the applications described below.

### Brief description of the invention

In one aspect, the invention describes a method to deice structures affected by ice accretion, such as wind turbine blades, airfoils, aircraft wings, wings in general, marine structures such as off-shore platforms, ships, power overhead lines, and the like. A plurality of power transistors is placed inside a structure such as a wind power blade, radiation is generated and absorbed by a coating as described in WO/2013/ 172 762 and SE 1400 194-5.

In another aspect of the invention, the invention describes a method for anti-icing, i.e. preventive heating of certain sections, especially the leading edge of an airfoil or wind turbine blade.

In comparison to prior art, the invention succeeds in providing a simple, economic, repair-friendly and stable solution for deicing and anti-icing. The solution obviates the need for expensive high-voltage generators as solid state power transistors require voltages of typically below 100 V.

In other aspects, the invention describes useful embodiments for deicing and anti-icing of wind turbines, aircrafts, civil engineering objects and off-shore constructions.

Thus, an object of the invention is to provide a method for deicing or anti-icing of a structure, characterized by the steps of:
a) providing a microwave absorbing layer on said structure,
b) generating microwaves by solid state radio frequency (RF) power transistors in the range 500 MHz to 20 GHz, preferably 900 MHz to 6 GHz, most preferably at 915 MHz or 2,45 GHz, and
c) transmitting said microwaves by required components to said microwave absorbing layer so as to heat up said microwave absorbing layer by the same being absorbing microwaves to above 0°C and thereby facilitating removal of ice, or preventing accretion of ice on said structure.

Preferred embodiments are defined in the dependent claims.

### Description of Preferred Embodiments

In one general embodiment, a plurality of power transistors such as the commercially available MHT1003 N (250 W, 58% efficiency, 2,45 GHz) or MHT1002N (350 W, 63% efficiency, 915 MHz, producer Freescale) in combination with an antenna is arranged near a structure, i.e. inside or outside or alongside the structure. More particular, the microwaves generated by solid state radio frequency (RF) power transistors is in the range of 500 MHz to 20 GHz, preferably 900 MHz to 6 GHz, most preferably at 915 MHz or 2,45 GHz.

The microwaves are transmitted by required component, such as waveguides or antennas, to a microwave absorbing layer so as to heat up said microwave absorbing layer by the same being absorbing microwaves to above 0°C and thereby facilitating removal of ice, or preventing accretion of ice on said structure.

For enabling said heating, a plurality of said solid state radio frequency power transistors are placed close to an area of a structure which requires heating in case a deicing or anti-icing operation.

Compared to using magnetrons as microwave source, the following advantages result: a) power transistors require low voltage, typically below 100 V, therefore a high voltage generator (5- 10 kV) is not needed, b) power transistors (ca 20 years continuous operation) are more stable than magnetrons (industrial quality ca 8 000 hours cw (= continuous wave) operation), c) power transistors are more controllable than magnetrons, d) as power transistors are mechanically more robust and considerably lighter than magnetrons, they can be placed inside wings and close to the areas where microwave radiation is required, e) power transistors can easily be operated in sequence, i.e. at least one of a plurality sections or different sections of a wind blade are deiced in a sequence in time, e.g. from the top, see below.

Power transistors in a wind power blade may be arranged along the full length of the blade. For a 90 m rotor, some 30-50 power transistors may be placed in one wing (of typically three). In order to achieve power densities of 1-5 kW/m² or more, it is also feasible to arrange 4-20 or more transistors (of 250 W each) per m² surface area. The transistors may be arranged on or inside a mechanical structure such as an aluminium profile, both for mechanical stability and protection from lightning strikes. Cabling to the power transistors may be led through such metal supports. The power transistors may be coupled e.g. via a short waveguide, to antennas for direction of the radiation towards the surface to be heated.

Instead of a metal support, a light weight composite structure or a flexible tape, supported by e.g. rolls, may be used, such that replacement of transistors is possible. It is preferred that the plurality of transistors including support elements (cables etc) can be removed from the wing, either for repair and maintenance or during summer time when the deicing functionality is not needed, and when the risk for lightning events is higher.

The number of transistors chosen (per m² or per wing) is a function of the anticipated or needed requirements and costs, but the typical range will be 1-20 transistors per m² or 0,25-5 kW/m². The larger part of the transistors will be able to deice the leading edge of the wind turbine blade as ice tends to accrete there. A high density of transistors is useful for fast and energy-efficient deicing, but increases the costs of the system.

A control software can be employed in order to generate radiation from selected power transistors, in any sequence. Typically, a wind turbine generator has 10-20 kW (some types 50 kW and more) electrical effect available in the hub. For deicing at harsh conditions, e.g. -20°C and harsh winds, this effect may not be sufficient to accomplish complete deicing, given that (even using WO 2013/172 762) a thin layer of composite (topcoat) and the microwave absorbing layer (SE 1400 194-5) has to be heated, and in addition the melting enthalpy of ice (typically 50-500 micrometres) has to be provided, whereby harsh winds at the same time remove heat provided by microwaves. Therefore, it is highly practical to heat smaller sections, e.g. 1-10 m² at a time, quickly, and heat the next sections once the first section is deiced, and so forth.
In a different embodiment, all available energy may be directed only towards the leading edge of the airfoil of wind turbine blade, in order to prevent icing during operation. Even a plurality of magnetrons would not provide such a degree of flexibility at a reasonable cost level.

In one embodiment, the microwave absorbing layer, preferably comprising CNT, is placed on aluminium or metal in general, and forms part of an airplane or helicopter wing. A plurality of transistors is used to heat up the microwave absorbing layer for deicing / anti-icing during flight. Typically, a power density of 3-10 kW/m² is needed which can be accomplished by using an appropriate number of transistors.

In general, said solid state radio frequency power transistors and said required components are arranged so that power densities of 0,5-20 kW/m², preferably 1-5 kW/m², are achieved.

The method disclosed is useful for the retrofit of existing wind turbine blades or other structures operating in cold climates. Compared to employing magnetrons, the engineering requirements in terms of using metal or other waveguides is considerably less. The method is also useful for new wind turbine blades or other new structures. The method is further useful for deicing and anti-icing in aircrafts.

Thus, existing wind turbine blades may be retrofitted by providing power transistor assemblies, antennas, voltage supplies providing 20-380 V, and control softwares and suitable microwave absorbing coatings.

In one embodiment, structures such as wind turbine blades may be coated with a microwave absorbing coating. Alternatively, the microwave absorbing layer may be part of a film which is attached to the wind turbine blade covering the whole blade or only a part of the blade, such as the leading edge area. Said film may comprise an adhesive layer, a microwave absorbing layer preferably comprising carbon nano tubes, and a top layer for erosion resistance. For deicing purposes, a skylift vehicle may be used. From such a skylift, a microwave emitter (e.g. emitting 5-50 kW) such as a panel may be scanned over the surface of the blade in order to deice the blade. The microwave emitter may also be placed on the tower, e.g. on an external elevator. This arrangement requires more personnel in operation, but may be useful in case existing turbines are impossible to retro-fit with microwave emitters inside the wings.

One specific embodiment relates to ships, oil platforms and off-shore constructions and airplane wings. The use of power transistors is not demanding a lot of space, therefore surfaces which have to be ice-free for e.g. safety reasons can be constructed such that a certain space is made available for power transistors and microwave propagation from said transistors. Airplane wings require high energy fluxes for the prevention of ice build-up, and microwave generators in combination with e.g. horn antennas can provide such energy fluxes especially to the leading edge of airplane wings, both metallic wings and in particular to polymeric wings.

In one embodiment, microwave transistors and antennas are placed on the tower of a wind turbine, and radiation is directed towards one of the blades of the wind turbine while said blade is placed in a parallel position to the tower. The microwave-absorbing coating may be partially transparent to microwaves such that one part of the radiation is absorbed partly by the surface closest to the tower, subsequently radiation passes through the blade in order to be absorbed by the surface further away from the tower. Various antennas may be used to achieve the objective of selectively heating surfaces in order to remove ice from wind turbine blades.

One specific embodiment relates to keeping overhead power lines, especially earth lines, free from ice. Such lines can according to the invention be equipped with a plurality of power transistors, and the cable may further be covered by a plastic sheeting comprising a microwave absorbing layer. If needed, the power transistors can be operated similar to the description above, e.g. in sequences in order to remove ice accreted on the outer surface.

## Claims

1. A method to provide deicing or anti-icing of a structure, **characterized by** the steps of:
a) providing a microwave absorbing layer on said structure,
b) generating microwaves by solid state radio frequency power transistors in the range 500 MHz to 20 GHz, preferably 900 MHz to 6 GHz, most preferably at 915 MHz or 2,45 GHz, and
c) transmitting said microwaves by required components to said microwave absorbing layer so as to heat up said microwave absorbing layer by the same absorbing microwaves to above 0°C and thereby facilitating removal of ice, or preventing accretion of ice on said structure.

2. The method according to claim 1, wherein said structure is selected from airfoils, wind turbine blades, aircraft wings, helicopter wings, marine structures such as off-shore platforms, ships, and power overhead lines.

3. The method according to claim 1, wherein said required components are waveguides or antennas.

4. The method according to any one of claims 1 to 3, **characterized by** placing a plurality of said solid state radio frequency power transistors close to an area of said structure which requires heating in case of a deicing or anti-icing operation.

5. The method according to any one of claims 1 to 4, **characterized by** operating said solid state radio frequency power transistors in a sequence such that at least one section of a plurality of sections of said structure is heated in an appropriate sequence.

6. The method according to any one of claims 1 to 5, **characterized by** arranging said solid state radio frequency power transistors and said required components so that power densities of 0,5-20 kW/m², preferably 1-5 kW/m², are achieved.

7. The method according to any one of claims 1 to 6, **characterized by** protecting said solid state radio frequency power transistors and required components from lightning impact by placing said equipment into a metallic structure.

8. The method according to any of the preceding claims, **characterized by** enabling the removal of said solid state radio frequency power transistors and required components structure, e.g. for repair and maintenance.

9. The method according to any one of claims 2 to 8, **characterized by** retrofitting existing wind turbine blades using power transistor assemblies, antennas, voltage supplies providing 20-380 V, and control softwares and suitable microwave absorbing coatings.

10. The method according to any one of claims 2-8, **characterized by** equipping new wind turbine blades with deicing or anti-icing functionality according to the invention.

11. The method according to any one of the preceding claims, **characterized by** emitting microwave radiation either from the inside of the structure or from the outside of the structure.

12. The method according to claim 11, **characterized by**, in the case of wind turbine blades, emitting micro wave radiation from a skylift vehicle equipped with a microwave device which may emit e.g. 5-50 kW microwave radiation close to the areas of the wind turbine blades affected by ice.

## Patentansprüche

1. Verfahren zum Bereitstellen einer Enteisung einer Struktur oder einer Eisverhütung an dieser, **gekennzeichnet durch** die folgenden Schritte:
a) Bereitstellen einer Mikrowellenabsorptionsschicht auf der Struktur,
b) Erzeugen von Mikrowellen durch Halbleiterfunkfrequenzleistungstransistoren im Bereich von 500 MHz bis 20 GHz, bevorzugt 900 MHz bis 6 GHz, am meisten bevorzugt bei 915 MHz oder 2,45 GHz und
c) Übertragen der Mikrowellen durch erforderliche Komponenten zu der Mikrowellenabsorptionsschicht, um die Mikrowellenabsorptionsschicht durch dieselben absorbierenden Mikrowellen auf über 0 °C zu erwärmen und dadurch eine Entfernung von Eis zu erleichtern oder eine Anlagerung von Eis auf der Struktur zu verhindern.

2. Verfahren nach Anspruch 1, wobei die Struktur ausgewählt ist aus Tragflächen, Windturbinenblättern, Luftfahrzeugflügeln, Hubschrauberflügeln, Seestrukturen, wie etwa Offshoreplattformen, Schiffen und Stromfreileitungen.

3. Verfahren nach Anspruch 1, wobei die erforderlichen Komponenten Wellenleiter oder Antennen sind.

4. Verfahren nach einem der Ansprüche 1 bis 3, **gekennzeichnet durch** Platzieren einer Vielzahl der Halbleiterfunkfrequenzleistungstransistoren in die Nähe eines Bereichs der Struktur, die im Fall eines Enteisungs- oder Eisverhütungsvorgangs eine Erwärmung erfordert.

5. Verfahren nach einem der Ansprüche 1 bis 4, **gekennzeichnet durch** Betreiben der Halbleiterfunkfrequenzleistungstransistoren in einer Sequenz derart, dass mindestens ein Abschnitt einer Vielzahl von Abschnitten der Struktur in einer angemessenen Sequenz erwärmt wird.

6. Verfahren nach einem der Ansprüche 1 bis 5, **gekennzeichnet durch** Anordnen der Halbleiterfunkfrequenzleistungstransistoren und der erforderlichen Komponenten derart, dass Leistungsdichten von 0,5-20 kW/m², bevorzugt 1-5 kW/m², erreicht werden.

7. Verfahren nach einem der Ansprüche 1 bis 6, **gekennzeichnet durch** Schützen der Halbleiterfunkfrequenzleistungstransistoren und der erforderlichen Komponenten vor Blitzeinschlag durch Platzieren der Ausrüstung in einer metallischen Struktur.

8. Verfahren nach einem der vorhergehenden Ansprüche, **gekennzeichnet durch** Ermöglichen der Entfernung der Halbleiterfunkfrequenzleistungstransistoren und der erforderlichen Komponentenstruktur, beispielsweise zur Reparatur und Wartung.

9. Verfahren nach einem der Ansprüche 2 bis 8, **gekennzeichnet durch** Nachrüsten von existierenden Windturbinenblättern unter Verwendung von Leistungstransistoranordnungen, Antennen, Spannungsversorgungen, die 20-380 V bereitstellen, und Steuersoftware und geeignete Mikrowellenabsorptionsbeschichtungen.

10. Verfahren nach einem der Ansprüche 2-8, **gekennzeichnet durch** Ausrüsten von neuen Windturbinenblättern mit einer erfindungsgemäßen Enteisungs- oder Eisverhütungsfunktionalität.

11. Verfahren nach einem der vorhergehenden Ansprüche, **gekennzeichnet durch** Emittieren einer Mikrowellenstrahlung entweder von der Innenseite der Struktur oder von der Außenseite der Struktur.

12. Verfahren nach Anspruch 11, im Fall von Windturbinenblättern **gekennzeichnet durch** Emittieren einer Mikrowellenstrahlung von einem Luftbrückenfahrzeug, das mit einer Mikrowellenvorrichtung ausgerüstet ist, die in der Nähe der Bereiche der Windturbinenblätter, die durch Eis beeinträchtigt sind, eine Mikrowellenstrahlung von 5 bis 50 kW emittieren kann.

## Revendications

1. Procédé pour fournir un dégivrage ou un antigivrage d'une structure, **caractérisé par** les étapes consistant :
a) à fournir une couche absorbant les micro-ondes sur ladite structure,
b) à générer des micro-ondes au moyen de transistors de puissance radiofréquence à semi-conducteurs dans la plage comprise entre 500 MHz et 20 GHz, de préférence comprise entre 900 MHz et 6 GHz, mieux encore à 915 MHz ou 2,45 GHz et
c) à transmettre lesdites micro-ondes, au moyen de composants nécessaires, à ladite couche absorbant les micro-ondes de sorte à réchauffer ladite couche absorbant les micro-ondes au moyen de l'absorption par ladite couche de micro-ondes à une température supérieure à 0 °C et, de ce fait, à faciliter l'élimination de la glace ou à empêcher l'accumulation de la glace sur ladite structure.

2. Procédé selon la revendication 1, dans lequel ladite structure est sélectionnée parmi des profils aérodynamiques, des pales de turbine éolienne, des ailes d'aéronef, des ailes d'hélicoptère, des structures marines telles que plates-formes au large, des navires et des lignes électriques aériennes.

3. Procédé selon la revendication 1, dans lequel lesdits composants nécessaires sont des guides d'ondes ou des antennes.

4. Procédé selon l'une quelconque des revendications 1 à 3, **caractérisé en ce qu'il consiste** à placer une pluralité desdits transistors de puissance radiofréquence à semi-conducteurs près d'une zone de ladite structure qui nécessite un chauffage dans le cas d'une opération de dégivrage ou d'antigivrage.

5. Procédé selon l'une quelconque des revendications 1 à 4, **caractérisé en ce qu'il consiste** à faire fonctionner lesdits transistors de puissance radiofréquence à semi-conducteurs dans une séquence de telle sorte qu'au moins une section d'une pluralité de sections de ladite structure soit chauffée dans une séquence appropriée.

6. Procédé selon l'une quelconque des revendications 1 à 5, **caractérisé en ce qu'il consiste** à disposer lesdits transistors de puissance radiofréquence à semi-conducteurs et lesdits composants nécessaires de telle sorte que des densités de puissance comprises entre 0,5 et 20 kW/m², de préférence comprises entre 1 et 5 kW/m², soient obtenues.

7. Procédé selon l'une quelconque des revendications 1 à 6, **caractérisé en ce qu'il consiste** à protéger lesdits transistors de puissance radiofréquence à semi-conducteurs et les composants nécessaires de l'impact de la foudre en plaçant ledit équipement dans une structure métallique.

8. Procédé selon l'une quelconque des revendications précédentes, **caractérisé en ce qu'il consiste** à permettre le retrait desdits transistors de puissance radiofréquence à semi-conducteurs et desdits composants nécessaires de la structure, par exemple, pour une réparation et une maintenance.

9. Procédé selon l'une quelconque des revendications 2 à 8, **caractérisé en ce qu'il consiste** à moderniser des pales de turbine éolienne existantes à l'aide d'ensembles transistors de puissance, d'antennes, d'alimentations en tension fournissant une tension comprise entre 20 et 380 V, et de logiciels de commande et de revêtements appropriés absorbant les micro-ondes.

10. Procédé selon l'une quelconque des revendications 2 à 8, **caractérisé en ce qu'il consiste** à équiper de nouvelles pales de turbine éolienne avec une fonctionnalité de dégivrage ou d'antigivrage selon l'invention.

11. Procédé selon l'une quelconque des revendications précédentes, **caractérisé en ce qu'il consiste** à émettre un rayonnement hyperfréquence soit à partir de l'intérieur de la structure, soit à partir de l'extérieur de la structure.

12. Procédé selon la revendication 11, **caractérisé en ce qu'il consiste**, dans le cas de pales de turbine éolienne, à émettre un rayonnement hyperfréquence à partir d'un véhicule à plate-forme élévatrice équipé d'un dispositif hyperfréquence qui peut émettre un rayonnement hyperfréquence compris par exemple entre 5 et 50 kW près des zones des pales de turbine éolienne affectées par de la glace.
